# EUROPEAN PATENT SPECIFICATION

(11) **EP 1 860 651 B1**
(45) Date of publication and mention of the grant of the patent: **06.01.2016**
(21) Application number: 07110264.4
(22) Date of filing: 10.03.2005
(51) Int. Cl.: G11B 7/007, G11B 20/18

(54) **Apparatus and method for recording and/or reproducing data to/from recording medium**
Vorrichtung und Verfahren zur Aufzeichnung und/oder Wiedergabe von Daten auf/von einem Aufzeichnungsmedium
Appareil et procédé d'enregistrement et/ou de reproduction de données vers/depuis un support d'enregistrement

(30) Priority: 18.03.2004 US 553961 P; 31.05.2004 KR 20040039143; 31.05.2004 KR 20040039144
(43) Date of publication of application: 28.11.2007
(62) Divisional of application: 05721929.7
(73) Proprietor: LG Electronics Inc., Seoul, 150-721 (KR)
(72) Inventor: Park, Yong Cheol, 427-731, Gyeonggi-do (KR)
(74) Representative: Vossius & Partner Patentanwälte Rechtsanwälte mbB

(56) References cited:
- EP-A- 1 329 888
- WO-A-2004/081936
- US-A- 5 237 553
- US-A1- 2002 136 118
- US-A1- 2003 210 627
- US-B1- 6 526 522

## Description

### Technical Field

The present invention relates to a high density optical disc, and more particularly, to an apparatus and method for recording and/or reproducing data to/from a recording medium.

### Background Art

Optical discs are widely used for recording a large quantity of data. Among such optical discs, new high density optical media (HD-DVD), such as the Blu-ray Disc (hereinafter referred to as "BD") are under development, which enable long time recording and storing of high definition video and audio data. Currently, a global standard technical specification of the Blu-ray disc, which is considered to be a next generation HD-DVD technology as a data storing solution that significantly surpasses the present DVD, is under development along with other digital apparatuses.

Accordingly, various draft standards related to the BD is under preparation, and in succession to a rewritable Blu-ray disc (BD-RE), various draft standards both for Blu-ray disc writable once (BD-WO), and Blu-ray disc read only (BD-ROM) are also under development. In such course of standardization process, as a method for recording and/or reproducing the BD-RE/R/ROM, recently a physical access control (PAC) method has been under discussion for solving problems caused by a failure of a drive, which supports an existing version, in supporting a new version when it is intended to introduce new functions for the BD-RE/R/ROM into the new version.

Conventional recording medium technology relating to defect management is described in US2002/136118, US2003/210627, WO2004/081936 (document under Article 54(3) EPC), US-A-5 237 553, or US-B1-6 526 522.

### Disclosure of Invention

The invention is specified by the claims.

Accordingly, the present invention is directed to an apparatus and method for recording and/or reproducing data to/from a recording medium that substantially obviate one or more problems due to limitations and disadvantages of the related art.

An object of the present invention is to provide a physical access control (PAC) method and a method and apparatus for recording and/or reproducing data to/from a recording medium by using the PAC method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a recording medium having a data structure for managing a data area of the recording medium includes at least one physical access control (PAC) cluster, the at least one PAC cluster including information for managing recording to and/or reproducing from the recording medium, wherein each PAC cluster includes a PAC header, common to each PAC cluster, and a PAC specific information area, which includes information specific to each PAC cluster, wherein the PAC header includes a segment information identifying at least one segment area in a user data area of the recording medium by a position information of the each segment area.

In another aspect of the present invention, a method for recording or reproducing data on a recording medium includes recording or reproducing at least one physical access control (PAC) cluster, the at least one PAC cluster including information for managing recording to and/or reproducing from the recording medium, each PAC cluster including segment information, if a PAC cluster is an unknown one and the segment information identifies at least one segment area in a user data area of the recording medium, recording to and/or reproducing from the at least one segment area by the PAC information, and if a defective area in the at least one segment area is replaced with a replacement area on a spare area of the recording medium, recording to and/or recording from the replacement area of the spare area by the PAC information.

In another aspect of the present invention, in a method for recording and/or reproducing data to/from a recording medium in response to a command from a host, a method for recording and/or reproducing data to/from a recording medium includes storing management information including PAC information read from the recording medium, determining a PAC_ID in the PAC information, and recording and/or reproducing data in accordance with unknown PAC rules and segment information recorded on the PAC, if the determined PAC_ID is not sensible, and if a defective area is encountered in a segment area of the segment information during the determining a PAC_ID and recording and/or reproducing data, sensing information on a replacement area written thereon in replacement of the defective area as a defect list (DFL) information in a defect management area (DMA), and managing the replacement area identically as the segment area belonging to the defective area. In a further aspect of the present invention, an apparatus for recording and/or reproducing data to/from a recording medium includes a memory for storing PAC information read from the recording medium, and a microcomputer for determining a PAC_ID in the PAC information, and recording/reproducing data in accordance with unknown PAC rules and segment information recorded on the PAC, if the determined PAC_ID is not sensible, and if a defective area is encountered in a segment area of the segment information during the determining a PAC_ID and recording and/or reproducing data, sensing information on a replacement area written thereon in replacement of the defective area from defect list (DFL) information in a defect management area (DMA), and managing the replacement area identically as the segment area belonging to the defective area.

It is to be understood that both the foregoing general description and the following detailed description of the present invention are exemplary and explanatory and are intended to provide further explanation of the invention as claimed.

### Brief Description of Drawings

The accompanying drawings, which are included to provide a further understanding of the invention and are incorporated in and constitute a part of this application, illustrate embodiments of the invention and together with the description serve to explain the principle of the invention. In the drawings:
FIG. 1 illustrates physical access control (PAC) zones on a high density optical disc according to the present invention;
FIG. 2 illustrates configurations of INFO2 zone and INFO1 zone on the high density optical disc according to the present invention;
FIG. 3 illustrates a PAC recorded on the high density optical disc according to the present invention;
FIG. 4 illustrates a structure of a PAC on the high density optical disc according to the present invention;
FIG. 5 illustrates a configuration of an "Unknown PAC Rules" field according to the present invention;
FIG. 6 illustrates segment zones on the high density optical disc according to the present invention;
FIG. 7 illustrates a PAC method of the high density optical disc according to the present invention;
FIG. 8 illustrates a method for recording segment position information on the high density optical disc according to the present invention; and
FIG. 9 illustrates a block diagram of an optical recording and/or reproducing apparatus according to the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts. In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meaning of each term lying within.

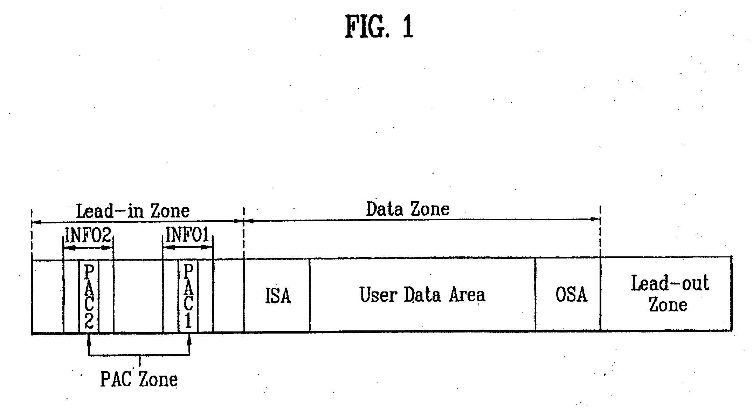

FIG. 1 illustrates PAC zones on a high density optical disc according to the present invention.

Referring to FIG. 1, the high density optical disc is sectioned and designated as, from an inner circumference to an outer circumference, a lead-in zone, a data zone, and a lead-out zone. At a fore end and rear end of the data zone, there may be an inner spare area (hereinafter referred to as "ISA") and an outer spare area (hereinafter referred to as "OSA"), respectively. The spare areas ISA and OSA are areas for re-allocation of data to be written on a defective area thereto, when the defective area occurs in the data zone. The lead-in zone is sectioned, and designated as an INFO2 zone and an INFO1 zone for recording various kinds of information thereon. The INFO2 zone and an INFO1 zone have physical access control (PAC) zones, respectively.

For simplicity, the PAC zone assigned to the INFO2 zone is referred to as a PAC2 zone, and the PAC zone assigned to the INFO1 zone is referred to as a PAC1 zone. One of the PAC2 zone and the PAC1 zone has an original PAC recorded thereon, and the other one is a back-up zone for recording a copy of the original PAC. In view of a direction of writing from the inner circumference to the outer circumference of the disc, it is preferable that the original PAC is recorded on the PAC2 zone, and the back-up PAC is recorded on the PAC1 zone. The PAC zone, provided for solving the problems liable to happen when an old version drive fails to detect functions on the disc added from a new version of drive, has an "unknown rule".

The "unknown rule" has rules defined thereon for controlling predictable operations of the disc, *i.e.,* controls starting from basic control of read, write, and the like to linear replacement of a defective zone, logical overwrite, and the like. Accordingly, an area is provided on the disc where the "unknown rule" is applicable thereto, having segments for defining an entire disc, or a certain portion of the disc, which will be described in more detail in a later process.

Thus, by defining an area to which the old version drive has access by using the "unknown rule", the new version of optical disc reduces unnecessary access operation of the old version drive.

Moreover, by defining an accessible area on a physical area of the disc for the old version drive to access by using the PAC, a data area having a user data recorded thereon can be protected more robustly, and improper access from an outside of the disc, such as hacking, can be protected. In the meantime, the INFO2 zone and the INFO1 zone having the PAC2 and PAC1 zones therein in the lead-in zone will be reviewed in view of writable characteristics of the high density optical disc.

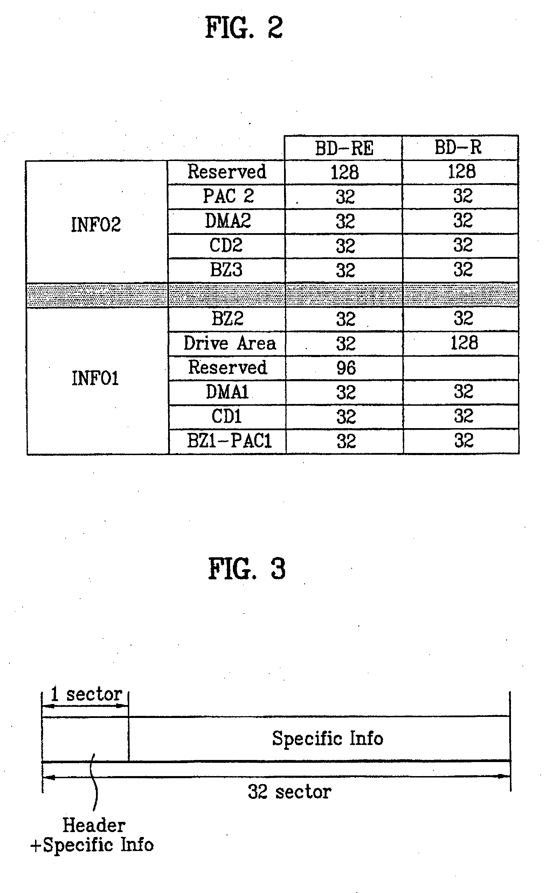

FIG 2 illustrates configurations of the INFO2 zone and the INFO1 zone on the high density optical disc according to the present invention. Referring to FIG. 2, in case of BD-RE of the high density optical disc, the INFO2 zone has 256 clusters including 32 clusters of PAC2 zone, 32 clusters of defect management area (DMA) 2 zone for management of defects, 32 clusters of control data (CD) 2 zone having control information recorded thereon, and 32 clusters of buffer zone (BZ) 3 zone of a buffer zone, The INFO1 zone includes 32 clusters of BZ2 zone of a buffer area, 32 clusters of drive area which is a drive area for storing specific information specific to a drive, 32 clusters of DMA1 zone for managing defects, 32 clusters of CD1 zone for recording control information, and BZ1-PACI zone for utilizing as the PAC zone.

In case of the high density optical disc of writable once (BD-R), the INFO2 zone has 256 clusters including a PAC2 zone, a DMA 2 zone, a CD 2 zone, and a BZ 3 zone, each with 32 clusters, and the INFO1 zone includes a BZ2 zone, a DMA1 zone, a CD1 zone, and BZ1-PACI zone, each with 32 clusters, and 128 clusters of drive area. Thus, the PAC zones of the present invention are assigned to the INFO2 zone and the INFO1 zone in the lead-in zone by 32 clusters respectively according to rewritable characteristics of the high density optical disc. In the PAC zone of 32 clusters, one PAC has one cluster. A structure in which one PAC is recorded at a size of one cluster will be described with reference to FIG. 3.

FIG. 3 illustrates a structure of a PAC recorded on the high density optical disc according to the present invention. Referring to FIG. 3, one PAC of one cluster size (32 sectors) includes a header zone, and a specific information zone specific to an optical disc drive. The PAC header zone has 384 bytes allocated to a first sector of the PAC, for recording various kinds of PAC information, such as information on an "unknown PAC rule" and segments, and the other area of the PAC zone has specific information specific to the optical disc drive which is called "known rule" recorded thereon.

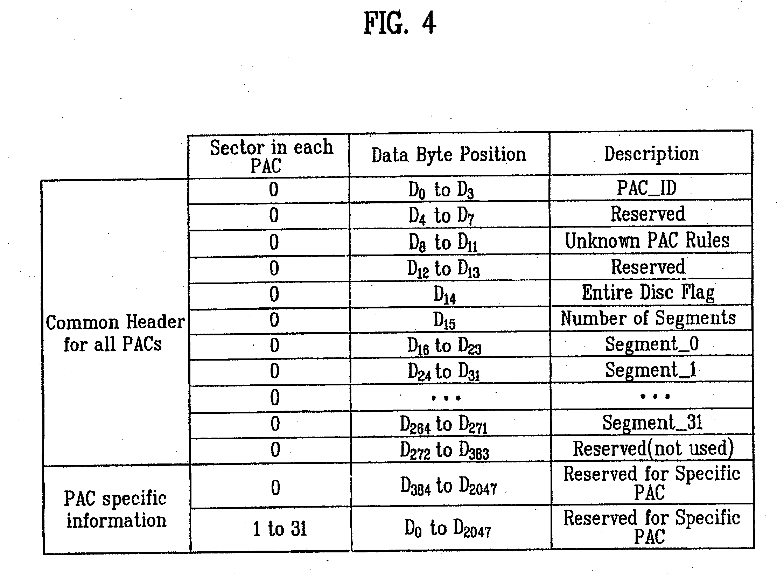

A detailed structure of the PAC recorded in above structure will be described with reference to FIG. 4. For simplicity, in the description of the present invention, particular fields of the PAC that require more detailed description will refer to drawings that illustrate the fields.

FIG. 4 illustrates a structure of a PAC on the high density optical disc according to the present invention. Referring to FIG. 4, as described above, the PAC includes a header portion applicable to all PACs, and an area having specific information specific to the drive recorded thereon.

In turn, the header portion includes 4 bytes of "PAC_ID", 4 bytes of "Unknown PAC Rules", 1 byte of "Entire Disc Flag", 1 byte of "Number of Segments", and 32 segments "Segment_0 ~ Segment_31" each with 8 bytes. The "PAC_ID" is a field for providing the present PAC status and identification codes, wherein if the "PAC_ID" has '00 00 00 00' bits, the "PAC_ID" indicates that the present PAC is not used, if the "PAC_ID" has 'FF FF FF FE' bits, the "PAC_ID" indicates that the present PAC zone is not available for use due to reasons of defects or the like, and if the "PAC_ID" has 'FF FF FF FF' bits, the "PAC_ID" indicates that the present PAC zone is available for use again even if the PAC zone is used in the past.

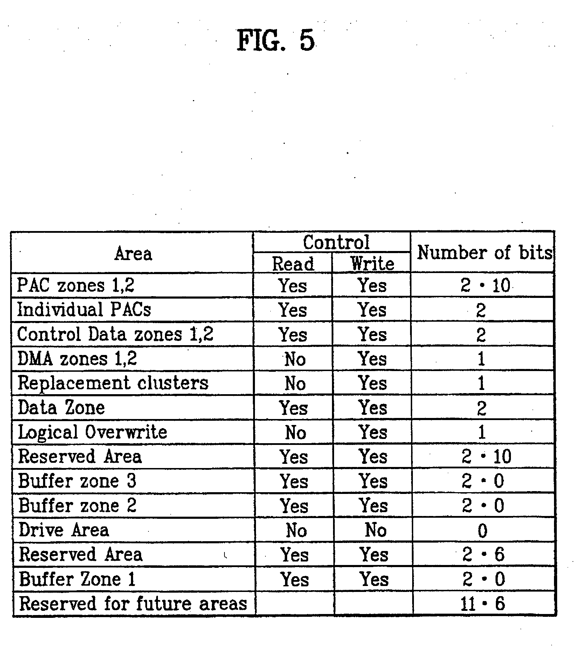

Moreover, by recording the "PAC_ID" in bits agreed beforehand, such as '54 53 54 00' bits, the "PAC_ID" is used as a code for determining if the disc is one that the present drive can make free access. More specifically, if the present drive does not know the "PAC_ID" applied thus, determining that this is a case when the present drive cannot understand the present PAC under a reason of version mismatch, or the like, the '54 53 54 00' bits are used as a code requiring reference to information recorded on the "Unknown PAC Rules" field. As described above, the "Unknown PAC Rules" field is used as a field that designates an operation range of the drive that cannot understand the present PAC, which will be described with reference to FIG. 5.

FIG. 5 illustrates a configuration of an "Unknown PAC Rules" field according to the present invention. Referring to FIG. 5, definition of controllability of various areas on the disc is enabled by the "Unknown PAC Rules". The "Area" on the table represents the controllable areas on the disc, the "Control" represents control types, such as read/write and so on, and "Number of bits" represents a number of bits required for the control. The additional bits in the "Number of bits" represent cases of dual layer disc with two recording/reproduction sides. For example, read/write controllability of the PAC zone can be represented with "PAC zones 1, 2" fields" and write controllability of defect management zone can be represented with "DMA Zone 1, 2" fields. Write controllability of a replacement area for a defective area can be represented with a "Replacement Clusters" field, read/write controllability of a data zone can be represent with a "Data Zone" field, and logical overwrite controllability can be represented with a "Logical Overwrite" field.

Evidently, the write controllability is physically applicable only to rewritable discs BD-RE, and BD-R, and, also the write controllability of a replacement area for a defective area is also applicable to the re-writable discs BD-RE, and BD-R. Thus, it is required to understand that the subject matter of the present invention is dependent on the re-writable characteristics of the high density optical disc. By using the above described method, the "Unknown PAC Rules" field enables designation of a controllable area on the disc for the drive of version mismatch. Moreover, above method is applicable, not only to the drive of version mismatch, but also to control of access to a particular physical area on a disc at a user's option.

In the meantime, the "Entire Disc Flag" field in FIG. 4 is used as a field for informing that the PAC is applicable to an entire area of the disc, and the "Number of Segments" field is a field representing a number of segment area the PAC is applicable thereto. Maximum 32 segments can be allocated to one PAC, and information on the allocated segments is written on fields of "Segment_0" to "Segment_31" each with 8 bytes. Each of the "Segment_0 ~ Segment_31" fields has the first PSN and the last PSN of the allocated segment area recorded thereon.

The segment will be described in more detail with reference to the accompanying drawings.

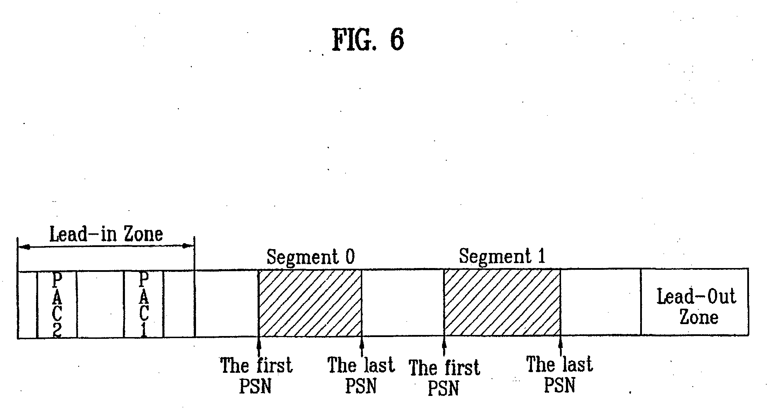

FIG. 6 illustrates segment zones on the high density optical disc according to the present invention. Referring to FIG. 6, if required, there can be maximum 32 segment areas on the high density optical disc of the present invention, for applying the PAC thereto starting from "Segment_0" in succession. In this case, by writing the first PSN which indicates a starting position of the allocated segment area, and the last PSN which indicates the last position of the allocated segment area on "Segment" fields of PAC2 and PAC1 zones, the optical disc drive is made to know positions of the segment areas. None of the plurality of allocated segments overlap, and the starting and last positions are designated at boundaries of clusters.

When a defective area occurs in the segment area allocated, in other words, in case of a writable high density optical disc BD-RE, or WO, a data to be recorded on the defective area is recorded on a replacement area, such as a spare area. In the present invention, the replacement area is also defined as an area belonging to the segment area, which will be described with reference to the attached drawings.

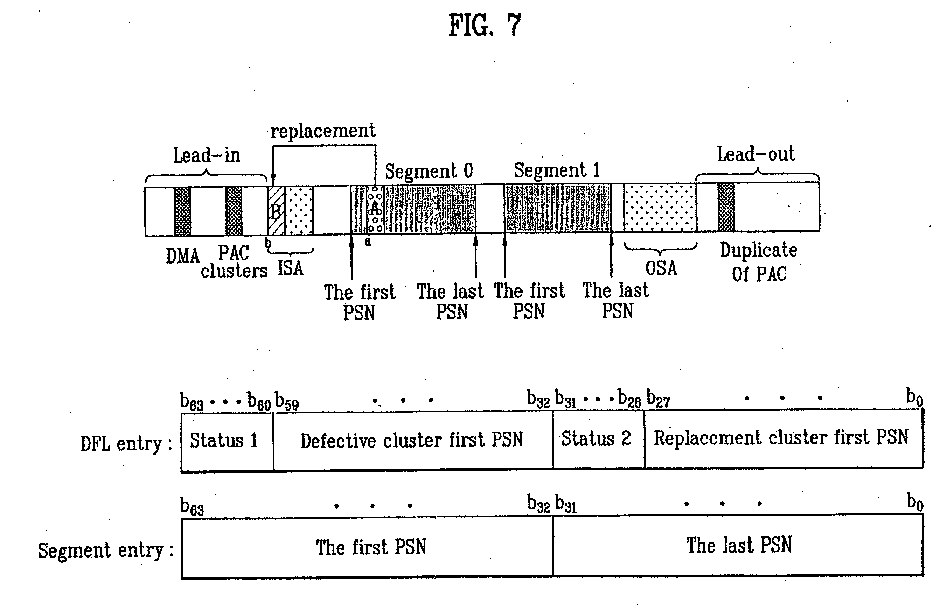

FIG. 7 illustrates a diagram showing a PAC method of the high density optical disc according to the present invention. Referring to FIG. 7, with regard to the segment area having the PAC of the present invention applied thereto, if the defective area "A" occurs at the segment area, a data to be written on the defective area "A" is written on the spare area ISA or OSA in replacement, and information on the replacement is written on a defect management area (DMA) in the lead-in zone as a defect list (DFL) entry, The DFL entry includes "Status 1" and "Status 2" fields, for recording information on types of the DFL entries, a "Defective Cluster first PSN" field for recording a first physical sector number of a defective cluster, and "Replacement Cluster first PSN" for recording a first physical sector number of replacement cluster.

The "Status 1" field has a '0000' bit recorded thereon for indicating that the defective area is of a RAD (Re-Allocatable Defect) type in which the defective area is replaced normally, the "Defective Cluster first PSN" field has 'a', the first PSN of the defective area, recorded thereon, the "Status 2" field has a '0000' bit recorded thereon for indicating that the "Status 2" field is not used in the case of the writable high density optical disc (in case of the high density optical disc of writable once, the bit is used for indicating that one cluster has a defect), and the "Replacement Cluster first PSN" field has 'b' recorded thereon, which is the first physical sector number of the replacement area. In this case, since only one time of writing is physically possible in the high density optical disc of writable once (WO), it is preferable that the data to be written on the defective area is recorded on a temporary disc management area (TDMA) on the disc separate from the DMA area as a temporary defect list (TDFL) having a structure the same with the DFL entry at first, and is written on DMA area as the DFL when the user requires, or after a disc closing at the time of writing completion.

In the present invention, the replacement area 'B' where the data to be written on the defective area 'A' is written thereon in replacement is defined as the replacement area 'B' belongs to the segment the defective area 'A' belongs by using the DFL entry. Since this method enables to dispense with the requirement for handling the replacement area 'B' as a separate segment, waste of the segment areas a number of which is limited to 32 is prevented, and effective segment management by using the PAC is made possible. Thus, though the preferred embodiment of the present invention is described by taking a RAD type as an example, in which replacement of the defective area is made within one cluster, it is apparent in a case of a consecutive re-allocatable defect (CRD) type in which defective areas occurred at a plurality of consecutive clusters are replaced that the defective area is managed in a fashion identical to the segment area the defective area belongs thereto.

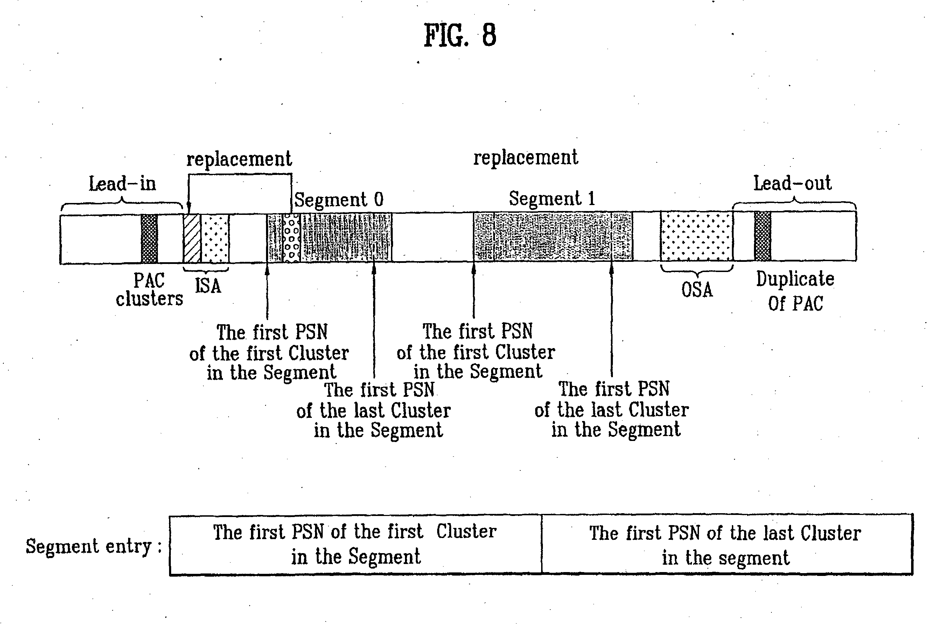

In the meantime, referring to FIG. 7, the PAC in the lead-out zone, a duplicate of the PAC of an original PAC, is recorded for more robust protection of the PAC, and is recorded in an INFO zone of the lead-out zone. As described above, the position information on the segment area recorded on the "Segment" field by using a segment entry has the first PSN and the last PSN each with 32 bits. In this instance, the position information on the segment area recorded on the "Segment" field may not be represented with the first PSN and the last PSN, but with physical sector numbers of clusters taking an actual recording unit on the optical disc is clusters into account, which will be described with reference to FIG. 8.

FIG. 8 illustrates a method for recording segment position information on the high density optical disc according to the present invention. Referring to FIG. 8, with regard to the plurality of segment areas managed by the PAC, a segment entry having position information of each of the segment areas includes the "first PSN of the first cluster in the Segment" field and the "first PSN of the last cluster in the Segment" field. More specifically, as described above, since the optical disc is written in cluster units, a position of the segment area is represented in cluster units, with the first physical sector number of the first cluster of the segment and the first physical sector number of the last cluster of the segment. This method is convenient in view of firmware for operation of the drive.

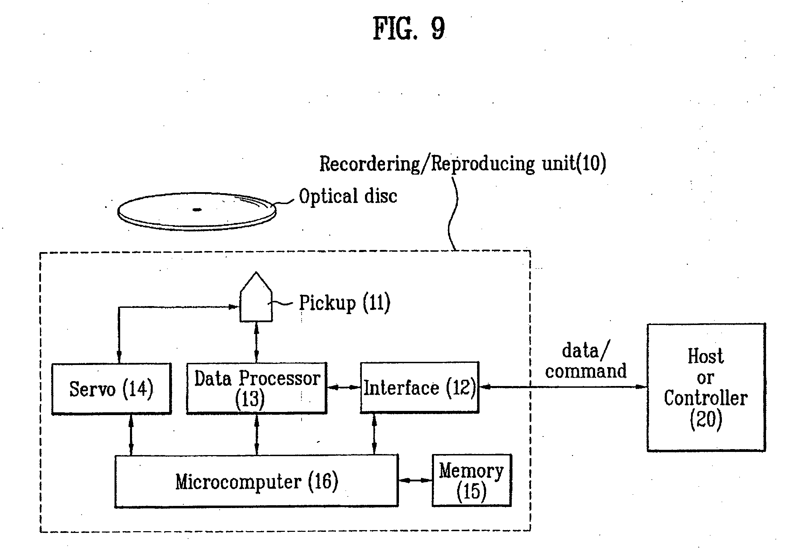

FIG. 9 illustrates a block diagram of an optical recording and/or reproducing apparatus according to the present invention. Referring to FIG. 9, the optical recording and/or reproducing apparatus includes a recording/reproducing device 10 for performing recording/reproduction on the optical disc, and a host, or controller 20 for controlling the recording/reproducing device 10. (Herein, the recording/reproducing device 10 is often referred to as an "optical disc drive", and both terms will be used in the description of the present invention).

More specifically, the host 20 gives a writing or reproduction order to write or reproduce to/from a particular area of the optical disc to the recording/reproducing device 10, and the recording/reproducing device 10 performs the recording/reproduction to/from the particular area in response to the order from the host 20. The recording/reproducing device 10 includes an interface unit 12 for performing communication, such as exchange of data and order, with the host 20, a pickup unit 11 for writing/reading a data to/from the optical disc directly, a data processor 13 for receiving signal from the pickup unit 11, and recovering a desired signal value, or modulating a signal to be written into a signal able to be written on the optical disc, and forwarding, a servo unit 14 for controlling the pickup unit 11 to read a signal from the optical disc accurately, or write a signal on the optical disc accurately, a memory 15 for temporary storage of various kinds of information including management information, and data, and a microcomputer 16 for controlling various parts of the recording/reproducing device 10.

A method for recording a PAC on a high density writable optical disc by using the optical recording and/or reproducing apparatus will now be described. Upon inserting the optical disc into the optical recording and/or reproducing apparatus, all management information is read from the optical disc and stored in the memory of the recording/reproducing device 10, for use at the time of recording/reproduction of the optical disc. Herein, if the user desires to write on a particular area of the optical disc, the host 20, which consider such desire of the user as a writing order, provides information on a desired writing position to the recording/reproducing device 10, along with a set of data that is to be written.

Then, the microcomputer 16 in the recording/reproducing device 10 receives the writing order, determines if the area of the optical disc in which the host 20 desires to write is a defective area or not from the management information stored in the memory 15, and performs data writing according to the writing order from the host 20 on an area which is not the defective area. In this case, if it is determined that the writing on an entire disc or on the particular area includes new features which a related art recording/reproducing device is not provided with, leading the related art recording/reproducing device to fail to sense, or if it is intended to restrict functions, such as writing or reproducing to/from the particular area of the disc according to requirements requested by the user, the microcomputer 16 of the recording/reproducing device 10 writes control information of the area on the PAC zone on the disc as "Unknown PAC rule". The microcomputer 16 of the recording/reproducing device 10 also writes PAC information, such as the PAC_ID for a written state, and segment information which is control information on the particular area of the disc.

If a defective area occurs at the segment area, by writing the data to be written on the defective area on a replacement area, such as the spare area, and the like, and information on this on the DMA area as a DFL entry, it is defined that the replacement area belongs to the segment area to which the defective area belongs. Moreover, the position of the segment area may be indicated with the first PSN and the last PSN of the cluster, or the first PSN of the first cluster and the last PSN of the last cluster of the segment in cluster units. Accordingly, the microcomputer 16 provides position information of the area the data is written thereon, or the PAC zone, and the data to the servo unit 14 and the data processor 13, so that the writing is finished at a desired position on the optical disc through the pickup unit 11.

In the meantime, a method for recording and/or reproducing the high density optical disc having the PAC information written by above method will be described. Upon inserting an optical disc into the optical recording and/or reproducing apparatus, all management information is read from the optical disc, and stored in the memory of the recording and reproducing device 15, for use at the time of recording and reproduction of the optical disc. The information in the memory 10 includes position information of various zones inclusive of the PAC zone on the disc. Then, a PAC_ID field of the PAC is examined, for verifying if the PAC_ID of the PAC of the PAC zone is a sensible PAC_ID. As a result of the verification, if the written PAC_ID is sensible, determining that it is a case when the recording and reproducing device having written the data on the disc has a version identical to a version of the present recording and reproducing device, or a case when there is no separate writing/reproduction restrictions, the recording/reproduction is performed according to the order from the host 20.

When the sensing of a code written on the PAC_ID fails, determining that it is a case when there are restrictions due to reasons, such as the recording and reproducing device having written the data on the disc has a version different from a version of the present recording and reproducing device, the recording/reproduction is preformed according to the order from the host with reference to recording/reproduction restriction areas on the disc written on the "Unknown PAC rule" and "Segment". In this case, if there is a defective area in the segment arca recorded on the "Segment", and a data to be written is written on a replacement area by the DFL information written on the DMA area, the data on the replacement area is determined to be the segment area, the recording/reproducing is performed according to restriction of setting of recording/reproducing of the segment area. For this, the microcomputer 16 provides the position information and data according to the order of the host to the servo unit 14 and the data-processor I3, so that the recording/reproduction is finished at a desired position on the optical disc through the pickup unit 11.

The method and apparatus for recording and/or reproducing data to/from the recording medium have the following advantages. The definition of an accessible area of a disc of a related art version drive by using PACs permits robust protection of a data area having a user data recorded thereon, to cut off improper external access from a hacker or the like. Also, the PAC which manages entire data zone or the segment areas on the disc permits effective data recording and reproducing to/from the high density optical disc. In addition, a method for handling a case when a defect occurs at a segment area on the disc managed by the PAC is suggested, to permit an effective data recording and reproducing to/from the high density optical disc. And, finally, by recording position information of the segment area on the disc managed by the PAC in clusters, it is convenient in view of firmware for operation of the drive.

### Industrial Applicability

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A recording medium, comprising:
a data area including a segment region and a replacement region;
a first control data area storing access control information for controlling access to the segment region, the access control information including:
position information of the segment region; and
an unknown rule designating an operation range of an apparatus that cannot identify the access control information; and
a second control data area storing defect control information for controlling a defective region of the recording medium and replacing the defective region with the replacement region,
wherein the replacement region corresponding to the defective region of the segment region is defined as belonging to the segment region to the access control information.

2. The recording medium of claim 1, wherein the access control information controls reading data from and/or writing data to the segment region.

3. The recording medium of claim 2, wherein the reading/writing is carried out to the replacement region.

4. The recording medium of claim 1, wherein the unknown rule defines read/write controllability for the segment region.

5. The recording medium of claim 1, wherein the segment region is in a user data area of the recording medium.

6. The recording medium of claim 1, wherein the replacement region is in a spare area of the recording medium.

7. The recording medium of claim 1, wherein the defect control information includes a defect list indicating the defective region.

8. The recording medium of claim 1, wherein the defect list includes at least one defect list entry, if defect being occurred in the recording medium.

9. The recording medium of claim 8, wherein the defect list entry includes address data of the defective region and the replacement region corresponding to the defective region.

10. A method of recording to and/or reproducing from a recording medium, comprising:
recording and/or reproducing access control information for controlling an access to a segment region of a user data area, the access control information including:
position information of the segment region; and
an unknown rule designating an operation range of an apparatus that cannot identify the access control information;
recording and/or reproducing defect control information for a defective region of the recording medium;
recording and/or reproducing data of the defective region in/from a replacement region corresponding to the defective region; and
controlling recording to and/or reproducing from the segment region according to the access control information, if the access control information is unknown to the apparatus.
wherein the replacement region corresponding to the defective region of the segment region is defined as belonging to the segment region to the access control information.

11. The method of claim 10, the method further comprising:
replacing the defective region of the segment region with the replacement region.

12. The method of claim 10, further comprising:
controlling reading data from and/or writing data to the segment region.

13. The method of claim 10, wherein the unknown rule defines read/write controllability for the segment region.

14. The method of claim 10, wherein the defect control information includes defect list including at least one defect list entry, if defect being occurred in the recording medium.

15. The method of claim 14, wherein the defect list entry includes address data of the defective region and the replacement region corresponding to the defective region.

16. An apparatus for recording to and/or reproducing from a recording medium, comprising:
an optical device configured to write and/or read data to/from the recording medium; and
a controller configured to control the optical device to
record/reproduce access control information for controlling an access to a segment region of a user data area, the access control information including:
position information of the segment region; and
an unknown rule designating an operation range of an apparatus that cannot identify the access control information
record and/or reproduce defect control information for a defective region of the recording medium;
record and/or reproduce data of the defective region in/from a replacement region corresponding to the defective region; and
control recording to and/or reproducing from the segment region according to the access control information, if the access control information is unknown to the apparatus,
wherein the replacement region corresponding to the defective region of the segment region is defined as belonging to the segment region to the access control information.

17. The apparatus of claim 16, wherein the unknown rule defines read/write controllability for the segment region.

18. The apparatus of claim 16, further comprising:
a host device configured to generate command of the recording to and/or reproducing from the recording medium and transmit the command to the controller.

## Patentansprüche

1. Aufzeichnungsmedium, das aufweist:
einen Datenbereich mit einer Segmentregion und einer Austauschregion;
einen ersten Steuerdatenbereich, der Zugriffssteuerungsinformationen zur Steuerung eines Zugriffs auf die Segmentregion speichert, wobei die Zugriffssteuerungsin-formationen umfassen:
Positionsinformationen der Segmentregion; und
eine unbekannte Regel, die einen Betriebsbereich einer Vorrichtung bestimmt, die die Zugriffssteuerungsinformationen nicht identifizieren kann; und
einen zweiten Steuerdatenbereich, der Fehlersteuerungsinformationen zum Steuern einer fehlerhaften Region des Aufzeichnungsmediums und Ersetzen der fehlerhaften Region durch die Austauschregion speichert,
wobei die Austauschregion, die der fehlerhaften Region der Segmentregion entspricht, für die Zugriffssteuerungsinformationen als zu der Segmentregion gehörig definiert ist.

2. Aufzeichnungsmedium nach Anspruch 1, wobei die Zugriffssteuerungsinformationen das Lesen von Daten von der Segmentregion und/oder das Schreiben von Daten darauf steuern.

3. Aufzeichnungsmedium nach Anspruch 2, wobei das Lesen/Schreiben in der Austauschregion ausgeführt wird.

4. Aufzeichnungsmedium nach Anspruch 1, wobei die unbekannte Regel die Lese-/Schreibsteuerbarkeit für die Segmentregion definiert.

5. Aufzeichnungsmedium nach Anspruch 1, wobei die Segmentregion in einem Nutzerdatenbereich des Aufzeichnungsmediums ist.

6. Aufzeichnungsmedium nach Anspruch 1, wobei die Austauschregion in einem Ersatzbereich des Aufzeichnungsmediums ist.

7. Aufzeichnungsmedium nach Anspruch 1, wobei die Fehlersteuerungsinformationen eine Fehlerliste umfassen, die die fehlerhafte Region angeben.

8. Aufzeichnungsmedium nach Anspruch 1, wobei die Fehlerliste wenigstens einen Fehlerlisteneintrag umfasst, wenn in dem Aufzeichnungsmedium ein Fehler auftritt.

9. Aufzeichnungsmedium nach Anspruch 8, wobei der Fehlerlisteneintrag Adressdaten der fehlerhaften Region und der Austauschregion, die der fehlerhaften Region entspricht, umfasst.

10. Verfahren zum Aufzeichnen auf/Wiedergeben von einem Aufzeichnungsmedium, das aufweist:
Aufzeichnen/Wiedergeben von Zugriffssteuerungsinformationen zur Steuerung eines Zugriffs auf eine Segmentregion eines Nutzerdatenbereichs, wobei die Zugriffssteuerungsinformationen umfassen:
Positionsinformationen der Segmentregion; und
eine unbekannte Regel, die einen Betriebsbereich einer Vorrichtung bestimmt, die die Zugriffssteuerungsinformationen nicht identifizieren kann;
Aufzeichnen/Wiedergeben von Fehlersteuerungsinformationen für eine fehlerhafte Region des Aufzeichnungsmediums;
Aufzeichnen/Wiedergeben von Daten der fehlerhaften Region in der Austauschregion, die der fehlerhaften Region entspricht; und
Steuern der Aufzeichnung auf/Wiedergabe von der Segmentregion gemäß den Zugriffssteuerungsinformationen, wenn der Vorrichtung die Zugriffssteuerungsinformationen unbekannt sind,
wobei die Austauschregion, die der fehlerhaften Region der Segmentregion entspricht, für die Zugriffssteuerungsinformationen als zu der Segmentregion gehörig definiert ist.

11. Verfahren nach Anspruch 10, wobei das Verfahren ferner aufweist:
Ersetzen der fehlerhaften Region der Segmentregion durch die Austauschregion.

12. Verfahren nach Anspruch 10, das ferner aufweist:
Steuern des Lesens von Daten und/oder des Schreibens von Daten in die Segmentregion.

13. Verfahren nach Anspruch 10, wobei die unbekannte Regel die Lese-/Schreibsteuerbarkeit für die Segmentregion definiert.

14. Verfahren nach Anspruch 10, wobei die Fehlersteuerungsinformationen eine Fehlerliste umfassen, die wenigstens einen Fehlerlisteneintrag umfasst, wenn in dem Aufzeichnungsmedium ein Fehler auftritt.

15. Verfahren nach Anspruch 14, wobei der Fehlerlisteneintrag Adressdaten der fehlerhaften Region und der Austauschregion, die der fehlerhaften Region entspricht, umfasst.

16. Vorrichtung zum Aufzeichnen/Wiedergeben von einem Aufzeichnungsmedium, die aufweist:
eine optische Vorrichtung, die konfiguriert ist, um Daten auf das Aufzeichnungsmedium zu schreiben und/oder von ihm zu lesen; und
eine Steuerung, die konfiguriert ist, um die optische Vorrichtung zu steuern, um
Zugriffssteuerungsinformationen zur Steuerung eines Zugriffs auf eine Segmentregion eines Nutzerdatenbereichs aufzuzeichnen/wiederzugeben, wobei die Zugriffssteuerungsinformationen umfassen:
Positionsinformationen der Segmentregion; und
eine unbekannte Regel, die einen Betriebsbereich einer Vorrichtung bestimmt, die die Zugriffssteuerungsinformationen nicht identifizieren kann;
Fehlersteuerungsinformationen für eine fehlerhafte Region des Aufzeichnungsmediums aufzuzeichnen/wiederzugeben;
Daten der fehlerhaften Region in die Austauschregion, die der fehlerhaften Region entspricht, aufzuzeichnen und/oder von ihr wiederzugeben; und
die Aufzeichnung auf die Segmentregion oder die Wiedergabe von dieser gemäß den Zugriffssteuerungsinformationen zu steuern, wenn der Vorrichtung die Zugriffssteuerungsinformationen unbekannt sind,
wobei die Austauschregion, die der fehlerhaften Region der Segmentregion entspricht, für die Zugriffssteuerungsinformationen als zu der Segmentregion gehörig definiert ist.

17. Vorrichtung nach Anspruch 16, wobei die unbekannte Regel die Lese-/Schreibsteuerbarkeit für die Segmentregion definiert.

18. Vorrichtung nach Anspruch 16, die ferner aufweist:
eine Hostvorrichtung, die konfiguriert ist, um einen Befehl für die Aufzeichnung auf das Aufzeichnungsmedium und/oder die Wiedergabe von ihm zu erzeugen und den Befehl an die Steuerung zu senden.

## Revendications

1. Support d'enregistrement, comprenant :
une zone de données comprenant un champ de segment et un champ de remplacement ;
un première zone de données de commande stockant des informations de commande d'accès pour commander l'accès au champ de segment, lesdites informations de commande d'accès comprenant :
des informations de position du champ de segment ; et
une règle inconnue désignant une plage opérationnelle d'un dispositif inapte à identifier les informations de commande d'accès ; et
une deuxième zone de données de commande stockant des informations de commande de défaut pour la commande d'un champ défectueux du support d'enregistrement et le remplacement du champ défectueux par le champ de remplacement,
où le champ de remplacement correspondant au champ défectueux du champ de segment est défini comme appartenant au champ de segment dans les informations de commande d'accès.

2. Support d'enregistrement selon la revendication 1, où les informations de commande d'accès commandent la lecture de données du champ de segment, et/ou l'écriture de données dans celui-ci.

3. Support d'enregistrement selon la revendication 2, où la lecture/l'écriture sont exécutées dans le champ de remplacement.

4. Support d'enregistrement selon la revendication 1, où la règle inconnue définit la possibilité de commande de lecture/d'écriture pour le champ de segment.

5. Support d'enregistrement selon la revendication 1, où le champ de segment est dans une zone de données d'utilisateur du support d'enregistrement.

6. Support d'enregistrement selon la revendication 1, où le champ de remplacement est dans une zone de réserve du support d'enregistrement.

7. Support d'enregistrement selon la revendication 1, où les informations de commande de défaut comprennent une liste de défauts indiquant le champ défectueux.

8. Support d'enregistrement selon la revendication 1, où la liste de défauts comprend au moins une entrée de liste de défauts, si le défaut est survenu dans le support d'enregistrement.

9. Support d'enregistrement selon la revendication 8, où l'entrée de liste de défauts comprend des données d'adresse du champ défectueux et du champ de remplacement correspondant au champ défectueux.

10. Procédé d'enregistrement sur un support d'enregistrement et/ou de reproduction à partir de celui-ci, comprenant :
l'enregistrement et/ou la reproduction d'informations de commande d'accès pour commander un accès à un champ de segment d'une zone de données d'utilisateur, lesdites informations de commande d'accès comprenant :
des informations de position du champ de segment ; et
une règle inconnue désignant une plage opérationnelle du dispositif inapte à identifier les informations de commande d'accès ;
l'enregistrement et/ou la reproduction d'informations de commande de défaut pour un champ défectueux du support d'enregistrement ;
l'enregistrement et/ou la reproduction de données du champ défectueux dans/depuis un champ de remplacement correspondant au champ défectueux ; et
la commande d'enregistrement dans, et/ou de reproduction depuis le champ de segment en fonction des informations de commande d'accès, si les informations de commande d'accès sont inconnues dans le dispositif,
où le champ de remplacement correspondant au champ défectueux du champ de segment est défini comme appartenant au champ de segment dans les informations de commande d'accès.

11. Procédé selon la revendication 10, comprenant en outre :
le remplacement du champ défectueux du champ de segment par le champ de remplacement.

12. Procédé selon la revendication 10, comprenant en outre :
la commande de lecture de données du champ de segment, et/ou d'écriture de données dans celui-ci.

13. Procédé selon la revendication 10, où la règle inconnue définit la possibilité de commande de lecture/d'écriture pour le champ de segment.

14. Procédé selon la revendication 10, où les informations de commande de défaut comprennent une liste de défauts présentant au moins une entrée de liste de défauts, si un défaut est survenu dans le support d'enregistrement.

15. Procédé selon la revendication 14, où l'entrée de liste de défauts comprend des données d'adresse du champ défectueux et du champ de remplacement correspondant au champ défectueux.

16. Dispositif d'enregistrement sur un support d'enregistrement et/ou de reproduction à partir de celui-ci, comprenant :
un dispositif optique prévu pour écrire des données sur un support d'enregistrement et/ou lire des données depuis celui-ci ; et
un dispositif de commande prévu pour commander
l'enregistrement/la reproduction par le dispositif optique d'informations de commande d'accès pour commander un accès à un champ de segment d'une zone de données d'utilisateur, lesdites informations de commande d'accès comprenant :
des informations de position du champ de segment ; et
une règle inconnue désignant une plage opérationnelle du dispositif inapte à identifier les informations de commande d'accès ;
l'enregistrement et/ou la reproduction d'informations de commande de défaut pour un champ défectueux du support d'enregistrement ;
l'enregistrement et/ou la reproduction de données du champ défectueux dans/depuis un champ de remplacement correspondant au champ défectueux ; et
la commande d'enregistrement dans, et/ou de reproduction depuis le champ de segment en fonction des informations de commande d'accès, si les informations de commande d'accès sont inconnues dans le dispositif,
où le champ de remplacement correspondant au champ défectueux du champ de segment est défini comme appartenant au champ de segment dans les informations de commande d'accès.

17. Dispositif selon la revendication 16, où la règle inconnue définit la possibilité de commande de lecture/d'écriture pour le champ de segment.

18. Dispositif selon la revendication 16, comprenant en outre :
un dispositif hôte prévu pour générer une instruction d'enregistrement sur le support d'enregistrement et/ou de reproduction depuis celui-ci, et de transmission de l'instruction au dispositif de commande.
